# EUROPÄISCHE PATENTSCHRIFT

(11) **EP 3 478 545 B1**
(45) Veröffentlichungstag und Bekanntmachung des Hinweises auf die Patenterteilung: **11.08.2021**
(21) Anmeldenummer: 17731545.4
(22) Anmeldetag: 20.06.2017
(51) Int. Cl.: B60T 7/04, B60K 23/02, B60K 26/02

(54) **PEDALEINHEIT FÜR EIN FAHRZEUG, INSBESONDERE NUTZFAHRZEUG**
PEDAL UNIT FOR A VEHICLE, PARTICULARLY A UTILITY VEHICLE
PÉDALIER POUR UN VÉHICULE, EN PARTICULIER UN VÉHICULE UTILITAIRE

(30) Priorität: 04.07.2016 DE 102016112188
(43) Veröffentlichungstag der Anmeldung: 08.05.2019
(73) Patentinhaber: KNORR-BREMSE Systeme für Nutzfahrzeuge GmbH, 80809 München (DE)
(72) Erfinder: RIZZI, Stefano, 20035 Lissone (IT); ANDREETTA, Giorgio, 20853 Biassono (MB) (IT)
(86) Internationale Anmeldenummer: PCT/EP2017/065042
(87) Internationale Veröffentlichungsnummer: WO 2018/007142

(56) Entgegenhaltungen:
- EP-A2- 0 788 931
- DE-A1- 2 138 952
- DE-A1-102004 018 266
- DE-C1- 10 040 043
- DE-T2- 69 901 991
- US-A1- 2007 209 471

## Beschreibung

Die vorliegende Erfindung betrifft eine Pedaleinheit für ein Fahrzeug, insbesondere für ein Nutzfahrzeug mit wenigstens einer Pedalwelle, wenigstens einem Schaltnocken, wenigstens einem Pedal und wenigstens einem Hebelarm.

Aus dem Stand der Technik sind im Zusammenhang mit Fahrerarbeitsplätzen für Nutzfahrzeuge bereits Pedaleinheiten für Fahrzeuge bekannt.

So offenbart beispielsweise die EP 1 749 732 A1 einen Fahrerarbeitsplatz für ein Nutzfahrzeug, wobei der Fahrerarbeitsplatz mehrere Einzelkomponenten und das Nutzfahrzeug eine Modulöffnung am Fahrzeuggerippe aufweisen.

Aus der EP 0 659 606 A1 ist eine Gaspedaleinrichtung für ein Kraftfahrzeug bekannt, die eine an einer Pedalhalterung in Form eines Gehäuses schwenkbar gelagerte Pedalplatte und mit einer Pedalplatte verbundenen Stelleinrichtung, nämlich einem Pedal, verbunden ist.

Die DE 20 2014 101 559 U1 offenbart ein Fußbedal zur Betätigung einer Maschine.

Aus der DE 21 38 952 A1 und der US 2007/209471 A1 sind Pedaleinheiten für Fahrzeuge bekannt. Pedaleinheiten für Fahrzeuge, insbesondere für Nutzfahrzeuge können, sofern sie mechanisch ausgebildet sind, eine sehr komplexe und auch sehr sperrige Mechanik aufweisen, die die Montage erschweren kann. Auch kann dies dazu führen, dass eine derartige Pedaleinheit vergleichweise viel Bauraum benötigt.

Es ist daher die Aufgabe der vorliegenden Erfindung, eine Pedaleinheit der eingangs genannten Art in vorteilhafter Weise weiterzubilden, insbesondere dahingehend, dass die Pedaleinheit einfacher montiert werden kann.

Diese Aufgabe wird erfindungsgemäß gelöst durch eine Pedaleinheit mit den Merkmalen des Anspruchs 1. Danach ist vorgesehen, dass eine Pedaleinheit für ein

Fahrzeug mit wenigstens einer Pedalwelle, wenigstens einem Schaltnocken, wenigstens einem Pedal und wenigstens einem Hebelarm versehen ist, wobei das Pedal mittels des Hebelarms fest an der Pedalwelle befestigt ist und wobei auch der Schaltnocken fest an der Pedalwelle befestigt ist.

Die Erfindung basiert auf dem Grundgedanken, dass die Pedaleinheit als integriertes Bauteil ausgebildet ist, so dass dieses mit wenigen Handgriffen eingebaut werden kann. Dies wird dadurch erreicht, dass die Bestandteile Pedal, Pedalwelle, Schaltnocken und Hebelarm fest an der Pedalwelle befestigt werden. Der Umstand, dass die Bestandteile Pedal, Pedalwelle, Schaltnocken und Hebelarm fest an der Pedalwelle befestigt erleichtert die Handhabung dieses Teils der Pedaleinheit, weil dann nicht mehrere Teile zusammengefügt und eingebaut werden müssen, sondern weil nunmehr nur noch ein Teil entsprechend montiert werden muss.

Das Fahrzeug kann beispielsweise ein Nutzfahrzeug, z.B. ein Lastkraftwagen oder dergleichen sein.

Des Weiteren ist vorgesehen, dass eine Lagerbuchse an einem Ende der Pedalwelle angeordnet ist. Mittels der Lagerbuchse kann das entsprechende Ende der Pedalwelle gelagert, insbesondere drehbar gelagert sein, eine aufwendige Bearbeitung der Pedalwelle zu vermeiden. So ist es beispielsweise möglich, die Pedalwelle oder entsprechende Gegenstücke aufwendig mit Passungen enger Toleranz versehen zu müssen, da dies mittels Lagerbuchse und somit durch beispielsweise Normteile erreicht werden kann. Die Herstellungskosten können hierdurch gesenkt werden.

Darüber hinaus ist vorgesehen, dass die Pedaleinheit weiter eine Pedalplatte mit einer ersten Wellenaufnahme und einer zweiten Wellenaufnahme aufweist, wobei die Pedalwelle mittels der ersten und zweiten Wellenaufnahme an der Pedalplatte befestigt ist. Mittels der Wellenaufnahmen kann eine Lagerung der Pedalwelle erfolgen. Insbesondere erfolgt die Betätigung des Schaltnockens über ein Treten des Pedals, so dass Hebelarm und Schaltnocken verschwenkt werden und zwar um die Längsachse der Pedalwelle, die in der ersten Wellenaufnahme und zweiten Wellenaufnahme drehbar gelagert ist.

Es ist vorgesehen, dass die erste Wellenaufnahme eine Öffnung mit einem Querschnitt aufweist, der größer ist als der Querschnitt eines ersten Pedalwellenlagerabschnitts der Pedalwelle, mit dem diese in die erste Wellenaufnahme während der Montage eingeführt ist. Dies ermöglicht eine einfache Montage der fertig montierten Pedalwelle, da hierdurch die Pedalwelle mit einem Angriffs- bzw. Eingriffswinkel von größer als Null in die Öffnung der ersten Wellenaufnahme eingesetzt werden kann.

Der Querschnitt der Öffnung der ersten Wellenaufnahme ist oval und/oder langlochförmig. Darüber hinaus kann alternativ oder zusätzlich vorgesehen sein, dass die Pedalwelle mit dem ersten Pedalwellenlagerabschnitt schräg in die Öffnung einführbar ist. Hierdurch wird es möglich, die Pedalwelle zwischen die erste Wellenaufnahme und die zweite Wellenaufnahme zu bringen und die Pedalwelle zunächst in die Öffnung der ersten Wellenaufnahme einzuführen und sie sodann in der Öffnung der ersten Wellenaufnahme derart durch Verschwenken ausrichten zu können, dass diese auch in die zweite Wellenaufnahme eingesetzt werden kann.

Der erste Pedalwellenlagerabschnitt der Pedalwelle kann im montierten Zustand der Pedaleinheit mittels einer Einsetzbuchse in der Öffnung der ersten Wellenaufnahme gehalten sein. Hierdurch wird es einfach möglich, die unterschiedlichen Querschnitte von Öffnungen der ersten Wellenaufnahme sowie des ersten Pedalwellenlagerabschnitts der Pedalwelle entsprechend auszugleichen, so dass die Pedalwelle in der ersten Wellenaufnahme zweckmäßig drehbar gelagert ist.

Des Weiteren kann vorgesehen sein, dass die zweite Wellenaufnahme eine Öffnung aufweist, die mit einem zweiten Pedalwellenlagerabschnitt der Pedalwelle eine Passung ausbildet. Denkbar ist auch, dass die Passung derart ausgebildet ist, dass hier die Lagerbuchse eingesetzt werden kann. Grundsätzlich ist es aber auch möglich, dass in der Öffnung der zweiten Wellenaufnahme überhaupt keine Lagerbuchse eingesetzt ist und stattdessen die Pedalwelle sich direkt in der Öffnung dreht.

Insbesondere kann vorgesehen sein, dass die Passung durch eine Bohrung, insbesondere eine Bohrung mit einem kreisrunden Querschnitt ausgebildet ist. Hierdurch wird eine einfache Herstellung, bei gleichzeitig zweckmäßiger Montage und gleichzeitig gewünschter Funktionalität bereitgestellt.

Weitere Einzelheiten und Vorteile der Erfindung sollen nun anhand eines in den Zeichnungen näher dargestellten Ausführungsbeispiels erläutert werden.

Es zeigen:
- Fig. 1: eine perspektivische Ansicht auf ein Ausführungsbeispiel einer erfindungsgemäßen Pedaleinheit für ein Fahrzeug ;
- Fig. 2: eine perspektivische Ansicht auf den Montagevorgang der Pedaleinheit gemäß Fig. 1 ;
- Fig. 3: eine weitere perspektivische Ansicht auf den Montagevorgang der Pedaleinheit gemäß Fig. 1 ;
- Fig. 4: eine weitere perspektivische Ansicht auf den Montagevorgang der Pedaleinheit gemäß Fig. 1 ;
- Fig. 5: eine weitere perspektivische Ansicht auf den Montagevorgang der Pedaleinheit gemäß Fig. 1 ; und
- Fig. 6: eine weitere perspektivische Ansicht auf den Montagevorgang der Pedaleinheit gemäß Fig. 1.

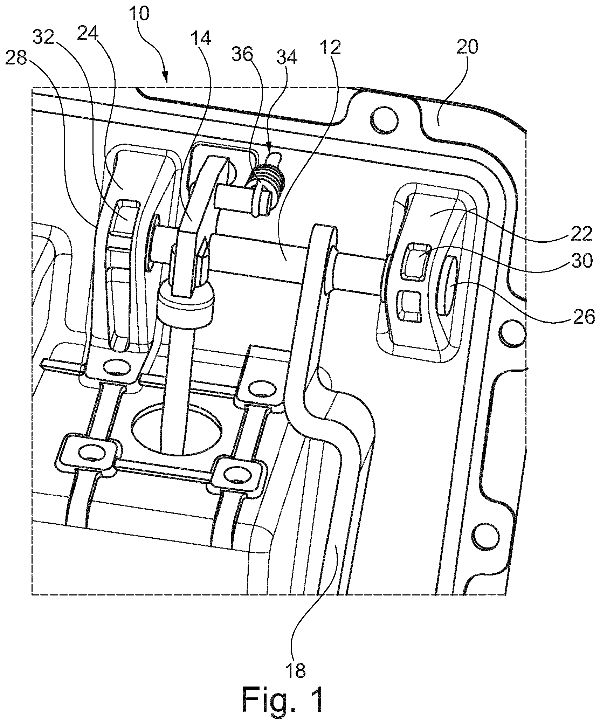

**Fig. 1** zeigt in perspektivischer Ansicht ein Ausführungsbeispiel einer erfindungsgemäßen Pedaleinheit 10 für ein Fahrzeug, hier für ein Nutzfahrzeug.

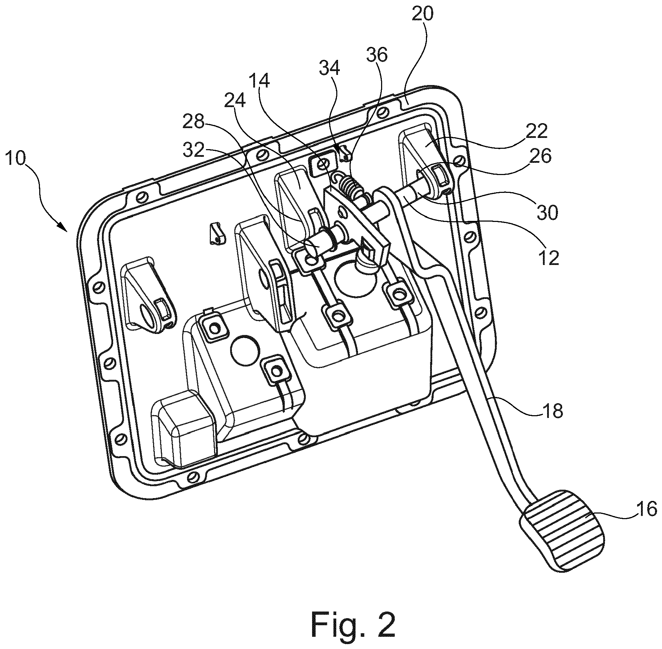

Die Pedaleinheit 10 weist eine Pedalwelle 12, einen Schaltnocken 14, ein Pedal 16 (siehe Fig. 2) und einen Hebelarm 18 auf.

Darüber hinaus weist die Pedaleinheit 10 eine Pedalplatte 20 auf, die eine erste Wellenaufnahme 22 und eine zweite Wellenaufnahme 24 aufweist.

Die erste Wellenaufnahme 22 weist eine erste Öffnung 26 und die zweite Wellenaufnahme 24 eine zweite Öffnung 28 auf.

An der Pedalwelle 12 sind das Pedal 16 mittels eines Hebelarms 18 und der Schaltnocken 14 fest mit der Pedalwelle 12 befestigt.

Das Pedal 16 ist an dem Hebelarm mittels einer geeigneten festen Verbindung an dem Hebelarm 18 befestigt, z.B. mittels einer Schraubverbindung, einer Steckverbindung oder dergleichen.

Der Hebelarm 18 ist die Pedalwelle 12 aufgeschoben und dann an der Befestigungsstelle einseitig verschweißt. Denkbar ist auch eine beidseitige Schweißnaht. Alternativ sind auch Schraubverbindungen, Lötverbindungen oder dergleichen denkbar.

Der Schaltnocken 14 ist analog dem Hebelarm 18 an der Pedalwelle 12 befestigt. Auch hier ist der Schaltnocken 14 an der Befestigungsstelle mittels einer einseitigen Schweißnaht einseitig mit der Pedalwelle 12 verschweißt. Denkbar ist auch eine beidseitige Schweißnaht. Alternativ sind auch Schraubverbindungen, Lötverbindungen oder dergleichen denkbar.

Die Pedalwelle 12 ist an den beiden Enden jeweils mit einem ersten Pedalwellenlagerabschnitt 30 bzw. mit einem zweiten Pedalwellenlagerabschnitt 32 versehen.

Der erste Pedalwellenlagerabschnitt 30 ist zum Einsetzen in die Öffnung 26 der ersten Wellenaufnahme 22 vorgesehen.

Der zweite Pedalwellenlagerabschnitt 32 ist zum Einsetzen in die Öffnung 28 der zweiten Wellenaufnahme 24 vorgesehen.

Des Weiteren ist ein Rückstellelement 34 vorgesehen, mittels dessen die Pedaleinheit in eine neutrale Stellung rückgeführt werden kann, wenn das Pedal 16 nicht mehr belastet ist.

Das Rückstellelement 34 weist eine Rückstellfeder 36.

Die Rückstellfeder 36 greift einerseits an der Pedalplatte 20 und andererseits am Schaltnocken 14 an.

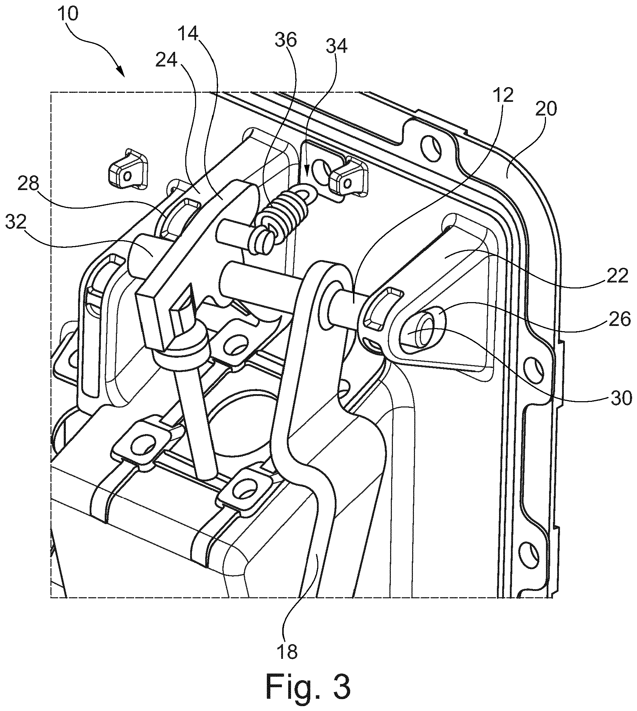

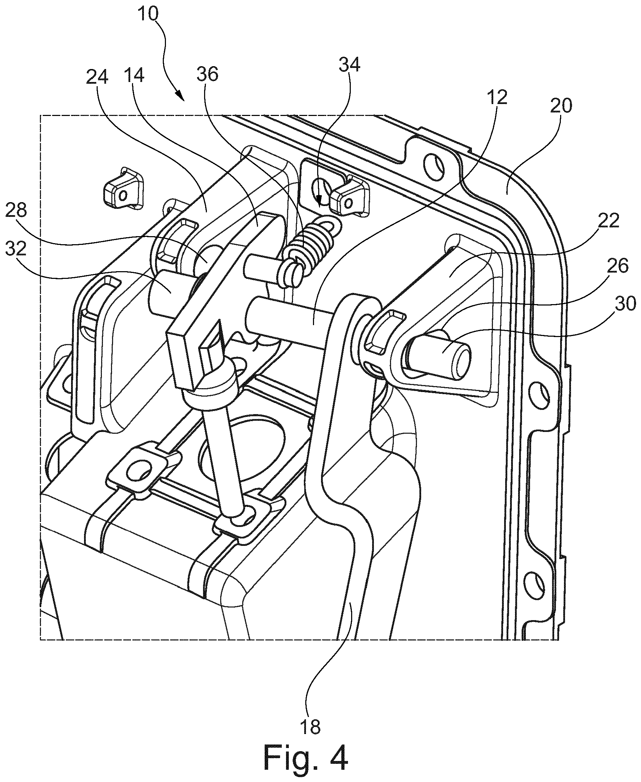

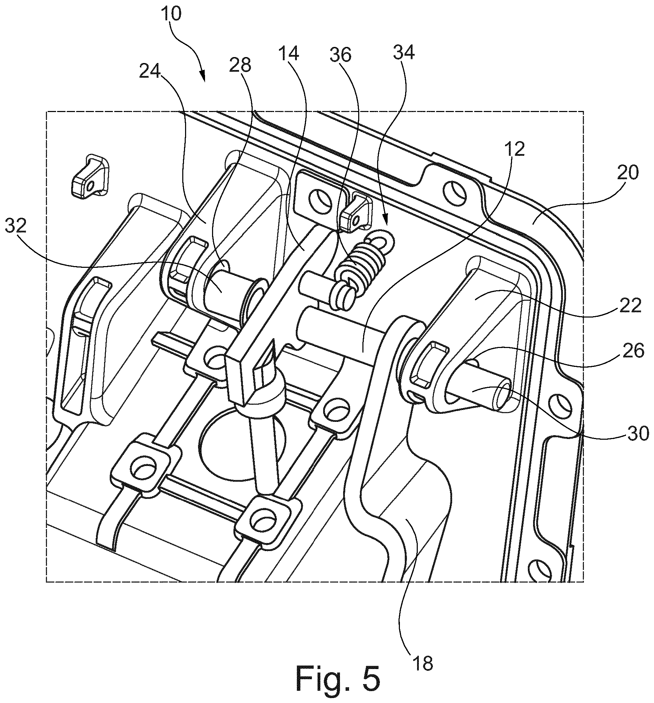

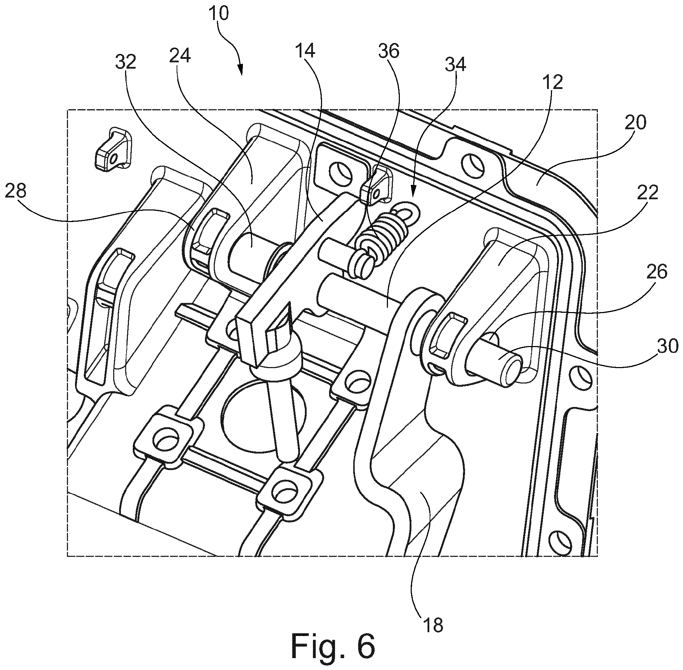

In den **Fig. 2 bis 6** ist die Montage der Pedalwelle 12 mit den daran fest befestigten Elementen Schaltnocken 14 sowie Pedal 16 und Hebelarm 18 gezeigt.

Zunächst wird die Pedalwelle 12 schräg in die Öffnung 26 der ersten Wellenaufnahme 22 eingeführt, d.h. mit einem Angriffswinkel größer Null und zwar soweit, dass der zweite Pedalwellenlagerabschnitt 32 der Pedalwelle 12 am entgegengesetzten Ende des ersten Pedalwellenlagerabschnitts 30 der Pedalwelle 12 zwischen der ersten Wellenaufnahme 22 und der zweiten Wellenaufnahme 24 befindlich ist.

Sodann wird der zweite Pedalwellenlagerabschnitt 32 in die Öffnung 28 der zweiten Wellenaufnahme 24 eingeführt.

Sowohl der erste Pedalwellenlagerabschnitt 30 als auch der zweite Pedalwellenlagerabschnitt 32 werden sodann mit den Lagerbuchsen jeweils in den Öffnungen 26 und 28 drehbar gelagert fixiert.

Dabei ist die Lagerbuchse für den ersten Pedalwellenlagerabschnitt 30 und die Öffnung 26 der ersten Wellenaufnahme 22 mit ihrer Außenkontur an den Innenquerschnitt der Öffnung 26 der ersten Wellenaufnahme 22 angepasst, so dass auch dort der Pedalwellenlagerabschnitt 30 entsprechend definiert drehbar gelagert ist.

### BEZUGSZEICHENLISTE

- 10: Pedaleinheit
- 12: Pedalwelle
- 14: Schaltnocken
- 16: Pedal
- 18: Hebelarm
- 20: Pedalplatte
- 22: erste Wellenaufnahme
- 24: zweite Wellenaufnahme
- 26: erste Öffnung
- 28: zweite Öffnung
- 30: erster Pedalwellenlagerabschnitt
- 32: zweiter Pedalwellenlagerabschnitt
- 34: Rückstellelement
- 36: Rückstellfeder

## Patentansprüche

1. Pedaleinheit (10) für ein Fahrzeug, insbesondere Nutzfahrzeug, mit wenigstens einer Pedalwelle (12), wenigstens einem Schaltnocken (14), wenigstens einem Pedal (16) und wenigstens einem Hebelarm (18), wobei das Pedal (16) mittels des Hebelarms (18) fest an der Pedalwelle (12) befestigt ist und wobei auch der Schaltnocken (14) fest an der Pedalwelle (12) befestigt ist, **dadurch gekennzeichnet, dass** eine Lagerbuchse an einem Ende der Pedalwelle (12) angeordnet ist, wobei die Pedaleinheit (10) weiter eine Pedalplatte (20) mit einer ersten Wellenaufnahme (22) und einer zweiten Wellenaufnahme (24) aufweist, wobei die Pedalwelle (12) mittels der ersten und zweiten Wellenaufnahme (22, 24) an der Pedalplatte (20) befestigt bzw. gelagert ist, wobei die erste Wellenaufnahme (22) eine Öffnung (26) mit einem ovalen und/oder langlochförmigen Querschnitt aufweist, der größer ist als der Querschnitt eines ersten Pedalwellenlagerabschnitts (30) der Pedalwelle (12), mit dem diese in die erste Wellenaufnahme (22) während der Montage eingeführt wird bzw. einführbar ist.

2. Pedaleinheit (10) nach Anspruch 1,
**dadurch gekennzeichnet, dass**
die Pedalwelle (12) in dem ersten Pedalwellenlagerabschnitt (30) schräg in die Öffnung (26) einführbar ist.

3. Pedaleinheit (10) nach Anspruch 1 oder Anspruch 2,
**dadurch gekennzeichnet, dass**
der erste Pedalwellenlagerabschnitt (30) der Pedalwelle (12) im montierten Zustand der Pedaleinheit (10) mittels einer Einsetzbuchse in der Öffnung (26) der ersten Wellenaufnahme (22) gehalten ist.

4. Pedaleinheit (10) nach einem der Ansprüche 1 bis 3,
**dadurch gekennzeichnet, dass**
die zweite Wellenaufnahme (24) eine Öffnung (28) aufweist, die mit einem zweiten Pedalwellenlagerabschnitt (32) der Pedalwelle (12) eine Passung ausbildet.

5. Pedaleinheit (10) nach Anspruch 4,
**dadurch gekennzeichnet, dass**
die Passung durch eine Bohrung, insbesondere eine Bohrung mit kreisrundem Querschnitt ausgebildet ist.

## Claims

1. A pedal unit (10) for a vehicle, in particular a utility vehicle, having at least one pedal shaft (12), at least one control cam (14), at least one pedal (16) and at least one lever arm (18), the pedal (16) being permanently fixed to the pedal shaft (12) by means of the lever arm (18) and the control cam (14) also being permanently fixed to the pedal shaft (12), **characterised in that** a bearing bush is arranged at one end of the pedal shaft (12), the pedal unit (10) further having a pedal plate (20) with a first shaft mounting (22) and a second shaft mounting (24), the pedal shaft (12) being fixed to or mounted on the pedal plate (20) by means of the first and second shaft mountings (22, 24), the first shaft mounting (22) having an opening (26) with an oval and/or slot-shaped cross section that is bigger than the cross section of a first pedal-shaft bearing section (30) of the pedal shaft (12) by means of which the pedal shaft (12) is or can be introduced into the first shaft mounting (22) during assembly.

2. A pedal unit (10) according to claim 1,
**characterised in that**
the pedal shaft (12) can be introduced at an angle into the opening (26) in the first pedal-shaft bearing section (30).

3. A pedal unit (10) according to claim 1 or claim 2,
**characterised in that**
when the pedal unit (10) is fitted the first pedal-shaft bearing section (30) of the pedal shaft (12) is held in the opening (26) of the first shaft mounting (22) by means of an insert bushing.

4. A pedal unit (10) according to any one of claims 1 to 3,
**characterised in that**
the second shaft mounting (24) has an opening (28) that forms a fit with a second pedal-shaft bearing section (32) of the pedal shaft (12).

5. A pedal unit (10) according to claim 4,
**characterised in that**
the fit is formed by a bore, in particular a bore having circular cross section.

## Revendications

1. Unité (10) à pédale d'un véhicule, notamment d'un véhicule utilitaire, comprenant au moins un arbre (12) de pédale, au moins une came (14) de commande, au moins une pédale (16) et au moins un bras (18) de levier, dans laquelle la pédale est fixée de manière fixe à l'arbre (12) de la pédale au moyen du bras (18) de levier et dans laquelle la came (14) de commande est fixée aussi de manière fixe à l'arbre (12) de la pédale, **caractérisée en ce qu'**un coussinet est monté à un bout de l'arbre (12) de la pédale, dans laquelle l'unité (10) à pédale a en outre une plaque (20) de pédale ayant un premier logement (22) d'arbre et un deuxième logement (24) d'arbre, dans laquelle l'arbre (12) de la pédale est fixé ou est monté sur la plaque (20) de la pédale au moyen du premier et du deuxième logement (22, 24) d'arbre, dans laquelle le premier logement (22) d'arbre a une ouverture (26) de section transversale ovale et/ou en forme de boutonnière, qui est plus grande que la section transversale d'une première partie (30) de palier de l'arbre (12) de la pédale, par laquelle celui-ci est introduit dans le premier logement (22) d'arbre pendant le montage ou peut l'être.

2. Unité (10) à pédale suivant la revendication 1,
**caractérisée en ce que**
l'arbre (12) de la pédale peut être introduit dans la première partie (30) de palier de l'arbre de la pédale de manière inclinée dans l'ouverture (26).

3. Unité (10) à pédale suivant la revendication 1,
**caractérisée en ce que**
la première partie (30) de palier de l'arbre (12) de la pédale est, lorsque l'unité (10) à pédale est à l'état monté, maintenue dans l'ouverture (26) du premier logement (22) d'arbre au moyen d'une douille d'insertion.

4. Unité (10) à pédale suivant l'une des revendications 1 à 3 ,
**caractérisée en ce que**
le deuxième logement (24) d'arbre a une ouverture (28), qui constitue avec une deuxième partie (32) de palier de l'arbre (12) de la pédale un ajustement.

5. Unité (10) à pédale suivant la revendication 4,
**caractérisée en ce que**
l'ajustement est constitué par un alésage, notamment un alésage de section transversale circulaire.
